# EUROPÄISCHE PATENTSCHRIFT

(11) **EP 2 875 303 B1**
(45) Veröffentlichungstag und Bekanntmachung des Hinweises auf die Patenterteilung: **29.06.2016**
(21) Anmeldenummer: 13736494.9
(22) Anmeldetag: 11.07.2013
(51) Int. Cl.: F28D 20/00, E02D 27/38

(54) **BODENISOLIERUNG FÜR HEISSSPEICHERTANKS**
FLOOR INSULATION FOR A HOT-MEDIA STORAGE RESERVOIR
ISOLATION DE SOL POUR UN RÉSERVOIR ACCUMULATEUR DE CHAUD

(30) Priorität: 17.07.2012 DE 102012014099
(43) Veröffentlichungstag der Anmeldung: 27.05.2015
(73) Patentinhaber: Linde AG, 80331 München (DE)
(72) Erfinder: POSSELT, Heinz, 83043 Bad Aibling (DE); KOGLER, Michael, A-2544 Leobersdorf (AT)
(74) Vertreter: Kasseckert, Rainer
(86) Internationale Anmeldenummer: PCT/EP2013/002061
(87) Internationale Veröffentlichungsnummer: WO 2014/012639

(56) Entgegenhaltungen:
- EP-A2- 2 469 212
- DE-A1- 3 502 434
- DE-A1-102008 017 897
- GB-A- 461 314
- JP-A- S61 146 923
- JP-A- 2011 074 567
- DATABASE WPI Section PQ, Week 201220 Thomson Scientific, London, GB; Class Q42, AN 2012-D08782 XP002715782, -& CN 102 363 962 A (JIANGSU SUNHOME NEW ENERGY CO LTD) 29. Februar 2012 (2012-02-29)

## Beschreibung

Die Wärmedämmung zur Reduktion von Wärmeleitfähigkeit spielt in den verschiedensten Anwendungsbereichen eine Rolle. Diverse Dämmstoffe sind bekannt, um Anlagen, Gebäude, Behälter oder dergleichen ganz oder teilweise zu ummanteln und sie oder ihren Inhalt so vor Abkühlung oder Erwärmung zu schützen. Einerseits können durch die Isolierung Energieeinsparungen verwirklicht werden, andererseits ermöglicht sie eine Speicherung von Energie, beispielsweise von mit Solaranlagen gewonnener Wärmeenergie. Schließlich erlaubt die Dämmung in Industrieanlagen, in denen Komponenten mit extremen Temperaturen betrieben werden, dass Menschen sich in der Nähe der Komponenten aufhalten können, oder dass Materialien oder Stoffe anderer benötigter Temperaturen dort eingesetzt werden können. So werden sowohl Arbeiten erleichtert als auch Platzeinsparungen der Gesamtanlage ermöglicht.

Bei der Auswahl eines Dämmstoffes für eine konkrete Verwendung sind neben den baulichen Voraussetzungen und den Einsatzbedingungen die relevanten Temperaturen zu beachten, müssen doch die Dämmungsmaterialien selbst den jeweiligen Temperaturen und mechanischen Beanspruchungen standhalten.

Insbesondere in Industrieanlagen werden häufig große Speichertanks für heiße oder kalte Medien eingesetzt. Beispielsweise werden Salzschmelzanlagen auf vielfältige Art im Bereich der erneuerbaren Energien eingesetzt, insbesondere als Wärmespeicheranlagen für Solarkraftwerke mit Parabolrinnen oder Turmkraftwerktechnologie.

Eine Dämmung des Bodens unter einem solchen Speichertank muss die mechanische Last durch das Eigengewicht des Tanks aufnehmen und ggf. etwaige Schwankungen des Untergrundes (beispielsweise bei Hochseeplattformen oder Erdbeben) überdauern.

Bei Speichertanks für heiße Medien im Bereich dreistelliger Celsiustemperaturen werden Calciumsilikat, Schaumglas und/oder Schüttungen aus schlecht wärmeleitendem Material für die Bodendämmung eingesetzt. Damit können beispielsweise Tanks, die beim Salzschmelzen verwendet werden und Temperaturen von 300° - 600° C erreichen, nach unten hin isoliert werden.

Die verwendeten Materialien sind jedoch zum Teil problematisch. So besitzt Schaumglas eine relativ geringe Druckfestigkeit, weswegen die mechanische Auslegung sehr kritisch ist. Insbesondere ist die Langzeitstabilität von Schaumglas bei hohen Temperaturen nicht bekannt. Die Verwendung von Schüttungen hingegen ist bezüglich der Setzung des Tanks kritisch.

Darüber hinaus kann das unter dem Heißspeichertankboden befindliche Fundament gemäß JP 2011 074567 A so strukturiert werden, dass mehrere Schmottsteinschichten in dem Fundament mit Mörtel aufeinandergesetzt werden.

Die vorliegende Erfindung hat die Aufgabe, eine Heißspeichertankanlage mit isolierendem Fundament und ein Verfahren zum Reduzieren eines Wärmeverlustes eines Mediums bereitzustellen, die einfach zu realisieren sind und eine hohe Stabilität gewährleisten.

### Offenbarung der Erfindung

Die genannte Aufgabe wird gelöst von der Heißspeichertankanlage mit den Merkmalen gemäß Anspruch 1 und von dem Verfahren mit den Merkmalen gemäß Anspruch 7. Bevorzugte Ausführungsformen sind in den Unteransprüchen, der nachfolgenden Beschreibung und der Figur offenbart.

Die erfindungsgemäße Heißspeichertankanlage umfasst einen Heißspeichertank mit einem Tankboden; der Tankboden kann beispielsweise aus Metall (z.B. Blech) sein oder dies enthalten. Unter dem Tankboden ist ein Fundament, das mit Mineralwolle gefüllte Ziegelsteine umfasst, wobei die Ziegelsteine plangeschliffen sind und in zwei oder mehr Schichten ohne Mörtel aufeinandergesetzt sind. Die Ziegelsteine können dabei beispielsweise Lochziegelsteine sein, in deren Löcher die Mineralwolle (die vorzugsweise Glaswolle ist oder umfasst) eingebracht ist. Insbesondere eignen sich beispielsweise Planziegel der Wanddicke zwischen 40 und 45 cm und/oder mit einer Wärmeleitzahl von 0,08 W/mK (z.B. der Marke Poroton).

Der Heißspeichertank ist vorzugsweise geeignet, Medien mindestens bis zu Temperaturen von 550°C aufzunehmen.

Die erfindungsgemäße Heißspeichertankanlage hat gegenüber Anlagen mit herkömmlicher Tankbodendämmung den Vorteil, dass das Fundament aus Ziegelsteinen eine wesentlich höhere mechanische Stabilität aufweist. Dabei hat sich herausgestellt, dass Ziegelsteine entgegen der bislang herrschenden Ansicht auch bei hohen Temperaturen von bis zu 550°C bei kontrollierten Temperaturschwankungen dauerbeständig sind und sich daher für den genannten Einsatzzweck eignen. Die Kosten für das erfindungsgemäße Fundament sind deutlich niedriger als die für bekannte Tankbodendämmungen.

In einer vorteilhaften Ausführungsform enthält der Heißspeichertank ein Medium, das eine Temperatur zwischen 150° C und 550°C, vorzugsweise zwischen 300°C und 500°C, noch bevorzugter zwischen 300°C und 400°C aufweist. Das Medium kann beispielsweise Salzschmelze sein und als Wärmespeicher dienen.

In einer bevorzugten Ausführungsform umfasst die Heißspeicheranlage eine Heizanlage zum Erhitzen eines zu speichernden Mediums außerhalb des Heißspeichertanks. Die Heißspeicheranlage weist dabei vorzugsweise Leitungen auf, mit denen ein von der Heizanlage erhitztes Medium dem Heißspeichertank zugeführt werden kann.

Alternativ oder zusätzlich kann die Heißspeicheranlage eine Heizanlage umfassen, die geeignet ist, ein oder das bereits im Heißspeichertank gespeicherte(s) Medium zu erhitzen. Die Heizanlage kann im Tank selbst angeordnet oder direkt auf einer obersten Ziegellage unterhalb des Tankbodens eingebaut sein. Die Heizanlage kann dazu dienen, Wärmeverluste auszugleichen, beispielsweise um im Heißspeichertank enthaltenes Salz auch bei einem Ausfall des eigentlichen Kreislaufs des Salzprozesses (solar oder industrielle Verfahrenstechnik) immer oberhalb der Schmelztemperatur zu halten.

In einer bevorzugten Ausführungsform der Heißspeicheranlage ist zwischen dem Tankboden und den Ziegelsteinen mindestens eine Glasnadelmatte angeordnet. Diese kann als Gleitschicht dienen.

Erfindungsgemäß sind die Ziegelsteine in dem Fundament plangeschliffen. Sie können dadurch so aufeinander angeordnet werden, dass etwaige Zwischenräume minimal sind. Dadurch wird die mechanische Festigkeit des Stapels gewährleistet.

Erfindungsgemäß wurden oder werden die Ziegelsteine in zwei oder mehr Schichten ohne Mörtel aufeinandergesetzt. Dadurch kann die Dicke des Fundaments und damit seine Isolationsleistung erhöht werden, ohne dass sehr große und damit schwieriger aufzubauende Ziegelsteine verwendet werden müssen. Durch die Vermeidung von Mörtel kann die Beständigkeit des Fundaments verbessert werden, weil Mörtel bei hohen Temperaturen im Laufe der Zeit zunehmend seine Festigkeit verliert. Bevorzugt ist eine Ausführungsform, bei der auf mindestene einer Schicht und/oder zwischen mindestens zwei Schichten eine oder mehrere Glasnadelmatte(n) angeordnet ist bzw. sind. Diese Matten dienen als Gleitschicht bei der thermischen Ausdehnung der Steine beim Aufheizen bzw. beim Abkühlen.

Alternativ oder zusätzlich kann das Fundament eine lastabtragende Dämmung aus mindestens einer hochtemperaturbeständigen Platte umfassen, die beispielsweise aus Calciumsilikat oder vergleichbarem Material bestehen kann. Diese Ausführungsform ist besonders geeignet, wenn im Tank ein Medium bei besonders hohen Temperaturen verwendet wird oder werden soll, beispielsweise bei 450°C oder mehr, insbesondere bis 1000°C.

Bei etwa 550°C tritt bei Ziegel der sogenannte Quarzsprung auf, der eine Veränderung der mechanischen Eigenschaften des Scherben zur Folge hat. Soll die Heißspeicheranlage für derart heiße Medien verwendet werden bzw. geeignet sein, können die Ziegel daher nur eine untere Schicht der thermischen Dämmung bilden. In diesem Fall ist zwischen dem Heißspeichertank und den Ziegelsteinen vorzugsweise mindestens eine hochtemperaturbeständige Platte (beispielsweise aus Calciumsilikat oder vergleichbarem Material) angeordnet. Damit können die Ziegelsteine vor den hohen Temperaturen geschützt werden, so dass eine maximale Ziegeltemperatur von 550°C eingehalten werden kann. Dadurch kann die Haltbarkeit der Heißspeicheranlage verlängert werden.

Das Fundament kann zudem mindestens eine Edelstahlmembrane zum Schutz des Fundaments vor auslaufendem korrosiven Salz und/oder mindestens eine Lage von keramischen (Boden-) Fliesen zur Druckverteilung von lokal wirkenden Kräften umfassen. Die Heißspeichertankanlage kann insbesondere Teil eines solarthermischen Kraftwerks sein.

Der Heißspeichertank kann beispielsweise eine kreiszylindrische Form mit einer zylindrischen Höhe von etwa 10m - 20m (beispielsweise 15m) und einem Grundflächendurchmesser von 20m - 40m (z.B. 30m) haben. Der Tankboden kann dabei eine Grundfläche des Kreiszylinders sein.

Die vorliegende Erfindung umfasst eine Verwendung der oben beschriebenen Ausführungsformen für Fundamente zur Isolierung von Heißspeichertanks nach unten.

Das erfindungsgemäße Verfahren dient entsprechend dazu, einen Wärmeverlust eines Mediums zu reduzieren. Das Verfahren umfasst ein Speichern des Mediums in einem Heißspeichertank, der auf einem Fundament angeordnet ist, das mit Mineralwolle gefüllte Ziegelsteine umfasst, wobei die Ziegelsteine plangeschliffen sind und iri zwei oder mehr Schichten ohne Mörtel aufeinandergesetzt werden. Die Mineralwolle kann z.B. Glaswolle sein oder enthalten.

Das Medium (z.B. Salzschmelze) kann eine Temperatur zwischen 150°C und 750°C, vorzugsweise zwischen 300°C und 600°C, noch bevorzugter zwischen 300°C und 450°C aufweisen.

Die Ziegelsteine sind vorzugsweise wie beschrieben angeordnet und/oder ausgestaltet; es ergeben sich die oben genannten Vorteile.

Insbesondere kann das Fundament eine lastabtragende Dämmung aus mindestens einer hochtemperaturbeständigen Platte umfassen, die vorzugsweise zwischen den Ziegelsteinen und dem Heißspeichertank angeordnet ist. In diesem Fall kann ein Medium einer Temperatur von mehr als 450°C, beispielsweise mehr als 550°C bis zu 1000°C gespeichert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Figurenbeschreibung

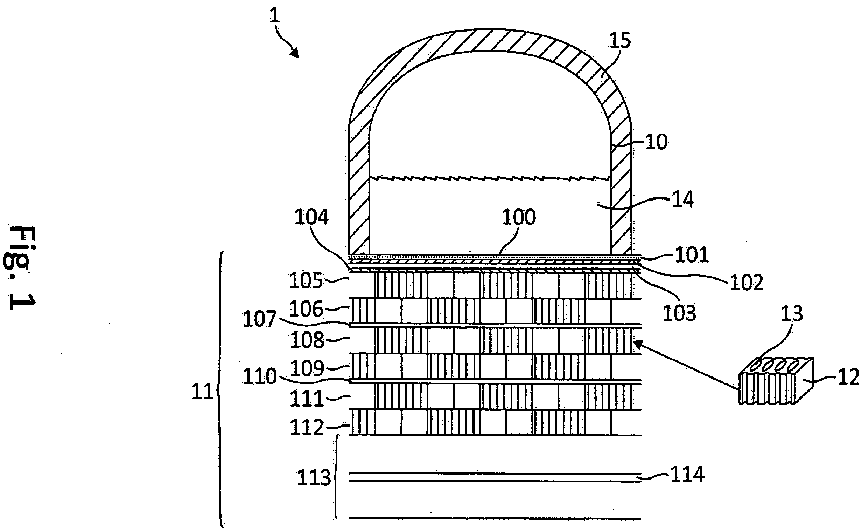

Figur 1 zeigt eine beispielhafte Anordnung für eine Heißspeichertankanlage entsprechend einer Ausführungsform der vorliegenden Erfindung.

Die in der einzigen Figur 1 (nicht maßstabsgetreu) schematisch gezeigte Heißspeicheranlage umfasst einen Heißspeichertank 10 mit einem Tankbodenblech 100. Unterhalb des Tankbodenblechs 100 befindet sich ein Fundament 11, das mehrere Schichten umfasst. Im Tank 10 befindet sich ein Medium 14, das beispielsweise Salz sein kann. In der dargestellten Ausführungsform ist der Heißspeichertank nach oben und zu den Seiten hin mit Glaswolle 15 isoliert.

Unmittelbar unter dem Tankboden 100 liegt zunächst eine Ausgleichsschicht 101, die z.B. Lehm und/oder Sand umfassen oder daraus bestehen kann. Diese Schicht kann beispielsweise etwa 5 cm dick sein und dient einer gleichmäßigen Auflage des Tanks. Unterhalb der Sandschicht sind nacheinander eine Edelstahlmembrane 102, eine Bodenfliesenschicht 103 sowie eine Glasnadelmatte 104 angeordnet. Diese Lagen schützen die nachfolgenden Schichten 105, 106, 108, 109, 111, 112 aus plangeschliffenen und mit Glaswolle 13 gefüllten Ziegelsteinen 12 und dienen der Druckverteilung und als Gleitschicht für die unterschiedliche thermische Ausdehung von Tankwand und Fundament.

Zur besseren Stabilität sind die Ziegelsteine in aufeinanderliegenden Schichten jeweils um 90° gegeneinander verdreht. Zwischen den Schichten 106 und 108 sowie zwischen den Schichten 109 und 111 sind jeweils Glasnadelmatten als Gleitschichten angeordnet.

Die Ziegelsteinschichten liegen auf einem Betonfundament 113 auf, das Kühlrohre 114 umfasst, über die noch vorhandene Restwärme abgeführt werden kann, um das Betonfundament und den darunter befindlichen Boden vor unzulässig hohen Temperaturen zu schützen.

Das dargestellte Fundament eignet sich insbesondere für einen Tank, der ein Medium fasst oder fassen soll, das maximal 450°C hat. Für heißere Medien werden vorzugsweise hochtemperaturbeständige Platten oberhalb der Ziegelsteinlagen eingebracht, wie dies oben geschildert ist.

### Bezugszeichenliste

- 1: Heißspeichertankanlage
- 10: Heißspeichertank
- 11: Fundament
- 12: Ziegelstein
- 13: Glaswolle
- 14: Medium
- 15: Glaswolle
- 100: Tankbodenblech
- 101: Ausgleichsschicht aus Sand
- 102: Edelstahlmembrane
- 103: Bodenfliesenschicht
- 104, 107, 110: Glasnadelmatten
- 105, 106, 108, 109, 111, 112: Ziegelsteinschichten
- 113: Betonfundament
- 114: Kühlrohr

## Patentansprüche

1. Heißspeichertankanlage (1), die umfasst:
einen Heißspeichertank (10) mit einem Tankboden (100);
ein Fundament (11) unter dem Tankboden,
**dadurch gekennzeichnet, dass**
das Fundament mit Mineralwolle (13) gefüllte Ziegelsteine (12) umfasst, wobei die Ziegelsteine plangeschliffen sind und in zwei oder mehr Schichten (105, 106, 108, 109) ohne Mörtel aufeinandergesetzt sind.

2. Heißspeichertankanlage gemäß Anspruch 1, wobei der Heißspeichertank ein Medium (14) enthält, das eine Temperatur zwischen 150° C und 750°C, insbesondere zwischen 300°C und 600°C, weiter insbesondere zwischen 300°C und 450°C aufweist.

3. Heißspeichertankanlage gemäß einem der Ansprüche 1 oder 2, die eine Heizanlage zum Erhitzen eines im Heißspeichertank (10) gespeicherten oder zu speichernden Mediums umfasst.

4. Heißspeichertankanlage gemäß einem der Ansprüche 1 bis 3, wobei auf mindestens einer Schicht und/oder zwischen mindestens zwei Schichten eine Glasnadelmatte (104, 107, 110) angeordnet ist.

5. Heißspeichertankanlage gemäß einem der vorstehenden Ansprüche, wobei das Fundament eine lastabtragende Dämmung aus mindestens einer hochtemperaturbeständigen Platte umfasst.

6. Solarthermische oder verfahrenstechnische Anlage, die eine Heißspeichertankanlage (1) gemäß einem der vorstehenden Ansprüche umfasst.

7. Verfahren zum Reduzieren eines Wärmeverlustes eines Mediums (14), wobei das Verfahren umfasst:
Speichern des Mediums in einem Heißspeichertank (10), der auf einem Fundament (11) angeordnet ist, das mit Glaswolle (13) gefüllte Ziegelsteine (12) umfasst, wobei die Ziegelsteine plangeschliffen sind und in zwei oder mehr Schichten (105, 106, 108, 109) ohne Mörtel aufeinandergesetzt werden.

8. Verfahren gemäß Anspruch 7, wobei ein Medium einer Temperatur zwischen 150°C und 750°C, insbesondere zwischen 300°C und 600°C, weiter insbesondere zwischen 300°C und 450°C gespeichert wird.

9. Verfahren gemäß einem der Ansprüche 7 oder 8, wobei auf mindestens einer Schicht und/oder zwischen mindestens zwei Schichten eine Glasnadelmatte (104, 107, 110) angeordnet wird.

10. Verfahren gemäß einem der Ansprüche 7 bis 9, wobei das Fundament (11) eine lastabtragende Dämmung aus mindestens einer hochtemperaturbeständigen Platte umfasst.

## Claims

1. Hot-storage tank installation (1), which comprises:
a hot-storage tank (10) with a tank bottom (100);
a foundation (11) under the tank bottom,
**characterized in that**
the foundation comprises bricks (12) filled with mineral wool (13), the bricks being surface-ground and being placed one on the other in two or more courses (105, 106, 108, 109) without mortar.

2. Hot-storage tank installation according to Claim 1, the hot-storage tank containing a medium (14) which has a temperature of between 150°C and 750°C, in particular of between 300°C and 600°C, and further, in particular, of between 300°C and 450°C.

3. Hot-storage tank installation according to either one of Claims 1 and 2, which comprises a heating installation for heating a medium stored or to be stored in the hot-storage tank (10).

4. Hot-storage tank installation according to one of Claims 1 to 3, a glass needle mat (104, 107, 110) being arranged on at least one course and/or between at least two courses.

5. Hot-storage tank installation according to one of the preceding claims, the foundation comprising load-dispelling insulation composed of at least one plate resistant to high temperature.

6. Solar-thermal or process-engineering installation, which comprises a hot-storage tank installation (1) according to one of the preceding claims.

7. Method for reducing a heat loss of a medium (14), the method comprising:
storage of the medium in a hot-storage tank (10) arranged on a foundation (11) which comprises bricks (12) filled with glass wool (13), the bricks being surface-ground and being placed one on the other in two or more courses (105, 106, 108, 109) without mortar.

8. Method according to Claim 7, a medium with a temperature of between 150°C and 750°C, in particular of between 300°C and 600°C, and further, in particular, of between 300°C and 450°C, being stored.

9. Method according to either one Claims 7 and 8, a glass needle mat (104, 107, 110) being arranged on at least one course and/or between at least two courses.

10. Method according to one of Claims 7 to 9, the foundation (11) comprising load-dispelling insulation composed of at least one plate resistant to high temperature.

## Revendications

1. Installation (1) de cuve d'accumulation de chaleur, comprenant :
une cuve (10) d'accumulation de chaleur présentant un fond de cuve (100),
une fondation (11) située en dessous du fond de la cuve,
**caractérisée en ce que**
la fondation comporte des briques (12) remplies de laine minérale (13) et
**en ce que** les briques sont planées et sont superposées en deux ou plusieurs couches (105, 106, 108, 109) sans mortier.

2. Installation de cuve d'accumulation de chaleur selon la revendication 1, dans laquelle la cuve d'accumulation de chaleur contient un fluide (14) qui présente une température comprise entre 150°C et 750°C, en particulier entre 300°C et 600°C et de façon tout particulière entre 300°C et 450°C.

3. Installation de cuve d'accumulation de chaleur selon l'une des revendications 1 ou 2, qui comporte une installation de chauffage qui chauffe un fluide conservé dans la cuve (10) d'accumulation de chaleur.

4. Installation de cuve d'accumulation de chaleur selon l'une des revendications 1 à 3, dans laquelle un tapis (104, 107, 110) d'aiguilles de verre est disposé sur au moins une couche et/ou entre au moins deux couches.

5. Installation de cuve d'accumulation de chaleur selon l'une des revendications précédentes, dans laquelle la fondation comporte une isolation de délestage constituée d'au moins une plaque réfractaire.

6. Installation solaire thermique ou installation technique de procédé, comportant une installation (1) de cuve d'accumulation de chaleur selon l'une des revendications précédentes.

7. Procédé de réduction de perte de chaleur d'un fluide (14), le procédé comportant les étapes qui consistent à :
conserver le fluide dans une cuve (10) d'accumulation de chaleur disposée sur une fondation (11) qui comporte des briques (12) remplies de laine de verre (13), les briques étant planées et étant superposées en deux ou plusieurs couches (105, 106, 108, 109) sans mortier.

8. Procédé selon la revendication 7, dans lequel un fluide présentant une température comprise entre 150°C et 750°C, en particulier entre 300°C et 600°C et tout particulièrement entre 300°C et 450°C est conservé.

9. Procédé selon l'une des revendications 7 ou 8, dans lequel un tapis (104, 107, 110) d'aiguilles de verre est disposé sur au moins une couche et/ou entre au moins deux couches.

10. Procédé selon l'une des revendications 7 à 9, dans lequel la fondation (11) comporte une isolation de délestage constituée d'au moins une plaque réfractaire.
